# EUROPÄISCHE PATENTSCHRIFT

(11) **EP 3 132 144 B1**
(45) Veröffentlichungstag und Bekanntmachung des Hinweises auf die Patenterteilung: **01.04.2020**
(21) Anmeldenummer: 15714543.4
(22) Anmeldetag: 14.04.2015
(51) Int. Cl.: F15D 1/00, G01F 1/684, G01F 1/692

(54) **SENSORELEMENT, SENSORMODUL, MESSANORDNUNG UND ABGASRÜCKFÜHRSYSTEM MIT EINEM SOLCHEN SENSORELEMENT SOWIE HERSTELLUNGSVERFAHREN**
SENSOR ELEMENT, SENSOR MODULE, MEASURING ASSEMBLY AND EXHAUST-GAS RE-CIRCULATION SYSTEM COMPRISING A SENSOR ELEMENT OF THIS TYPE, AND PRODUCTION METHOD
ÉLÉMENT DE DÉTECTION, MODULE DE DÉTECTION, AGENCEMENT DE MESURE ET SYSTÈME DE RECIRCULATION DE GAZ D'ÉCHAPPEMENT MUNI DUDIT ÉLÉMENT DE DÉTECTION, AINSI QUE PROCÉDÉ DE FABRICATION

(30) Priorität: 17.04.2014 DE 102014105483
(43) Veröffentlichungstag der Anmeldung: 22.02.2017
(73) Patentinhaber: Heraeus Nexensos GmbH, 63801 Kleinostheim (DE)
(72) Erfinder: WIENAND, Karlheinz, 63741 Aschaffenburg (DE); ASMUS, Tim, 35469 Allendorf-Winnen (DE); PITZIUS, Peter, 66687 Wadern (DE)
(74) Vertreter: Kilchert, Jochen
(86) Internationale Anmeldenummer: PCT/EP2015/058084
(87) Internationale Veröffentlichungsnummer: WO 2015/158720

(56) Entgegenhaltungen:
- WO-A1-2007/048573
- JP-A- H06 275 407
- JP-A- 2000 227 352
- JP-A- 2000 258 202
- US-A1- 2011 284 110
- US-B1- 6 617 956

## Beschreibung

Die Erfindung betrifft ein Sensorelement gemäß dem Oberbegriff des Patentanspruchs 1. Ferner befasst sich die Erfindung mit einem Sensormodul, einer Messanordnung und einem Abgasrückführsystem mit einem solchen Sensorelement sowie mit einem Herstellungsverfahren für das Sensorelement. Ein Sensorelement der eingangs genannten Art ist beispielsweise aus WO 2007/048573 A1 bekannt.

Das vorbekannte Sensorelement bildet ein Temperaturmesselement eines Strömungssensors. Das Sensorelement weist ein Platin-Dünnfilmelement auf, das zwischen zwei keramische Folien eingebettet ist. Dabei dient eine erste Keramikfolie als Träger für die Dünnschichtstruktur des Platin-Dünnfilmelements. Die zweite Keramikfolie bildet eine Glaskeramikschicht, die das Platin-Dünnfilmelement bedeckt.

Der Strömungssensor, der das vorbekannte Sensorelement umfasst, kommt vorzugsweise in Abgasanlagen, insbesondere zur Regelung eines Abgasrückführsystems, zum Einsatz. Derartige Abgasrückführsysteme ermöglichen durch die Rückführung von Verbrennungsgasen eines Verbrennungsmotors in die Brennkammern eine Reduktion von Stickoxiden. Der Strömungssensor, der neben dem Temperaturmesselement außerdem ein Heizleistungsmesselement aufweist, ermittelt dabei den Massenfluss des Abgases innerhalb eines rückführenden Abgasrohres.

Als problematisch hat sich erwiesen, dass sich im Abgasstrom enthaltene Schmutzpartikel, insbesondere Rußpartikel, auf dem Sensorelement ablagern und so die Messgenauigkeit des Sensorelements beeinträchtigen. Daher wird in WO 2007/048573 A1 vorgeschlagen, in das Temperaturmesselement zusätzlich ein Heizelement zu integrieren, so dass die sich am Temperaturmesselement anlagernden Schmutzpartikel bzw. Rußpartikel durch Freibrennen entfernt werden können. Ein solcher Aufbau eines Sensorelements ist relativ aufwändig und führt zu erhöhten Herstellungskosten. Außerdem ist ein zusätzlicher Energieaufwand erforderlich, um die sich am Sensorelement anlagernden Schmutzpartikel bzw. Rußpartikel in regelmäßigen Abständen durch Freibrennen zu entfernen.

JP 06-275407 A offenbart ein Sensorelement mit einer Dünnschichtstruktur aus Platin die auf einem keramischen Träger aufgebracht ist und durch eine Glaskeramikschicht bedeckt ist.

JP 2000 258202 A beschreibt ein Durchflusserfassungselement mit einem Platindraht als Widerstandselement, das auf einen zylindrischen Keramikträger gewickelt ist. Über dem Widerstandselement wird eine Glasbeschichtung gebildet. Das Glas hat einen niedrigen Schmelzpunkt. Das Glas wird mit gleichmäßig gemischten kugelförmigen Keramikkugeln aufgetragen und eingebrannt. Durch die Oberflächenprofilierung wird die Ablagerung von Staub auf der Außenfläche verringert.

Die Aufgabe der Erfindung besteht darin, ein Sensorelement anzugeben, das, insbesondere über einen längeren Einsatzzeitraum, eine hohe Messgenauigkeit aufweist und kostengünstig produzierbar ist. Ferner besteht die Aufgabe der Erfindung darin, ein Sensormodul, eine Messanordnung und ein Abgasrückführsystem mit einem solchen Sensorelement anzugeben. Außerdem ist es Aufgabe der Erfindung, kostengünstige Herstellungsverfahren für ein solches Sensorelement bereitzustellen.

Erfindungsgemäß wird diese Aufgabe im Hinblick auf das Sensorelement durch den Gegenstand des Patentanspruchs 1, im Hinblick auf das Sensormodul durch den Gegenstand des Patentanspruchs 8, auch im Hinblick auf die Messanordnung durch den Gegenstand des Patentanspruchs 11, im Hinblick auf das Abgasrückführsystem durch den Gegenstand des Patentanspruchs 12 und im Hinblick auf das Herstellungsverfahren durch die Gegenstände der Patentansprüche 14, 16 und 17 gelöst.

Die Erfindung beruht konkret auf dem Gedanken, in Sensorelement mit einer Dünnschichtstruktur aus Platin oder einer Platin-Legierung anzugeben, die auf einem keramischen Träger, insbesondere Al₂O₃-Träger, aufgebracht und durch eine Glaskeramikschicht bedeckt ist. Erfindungsgemäß weist zumindest die Glaskeramikschicht eine Außenoberfläche mit einer Oberflächenprofilierung auf.

Es hat sich überraschend gezeigt, dass eine Profilierung der Außenoberfläche der Glaskeramikschicht dazu führt, dass Schmutzpartikel, insbesondere Rußpartikel, keine ausreichende Angriffsfläche haben, um sich an einem Sensorelement anzulagern. Durch die Oberflächenprofilierung wird also eine schmutzabweisende bzw. rußabweisende Außenoberfläche bereitgestellt, so dass der Sensor über einen langen Zeitraum zuverlässige Messergebnisse liefert. Somit wird der Einsatz eines zusätzlichen Heizelements, wie es aus dem Stand der Technik bekannt ist, vermieden. Dies senkt die Herstellungskosten und reduziert die Komplexität des Sensorelements.

Eine besonders gute schmutzabweisende bzw. Ruß abweisende Außenoberfläche ergibt sich, wenn - wie in einer bevorzugten Ausführungsform vorgesehen ist - die Oberflächenprofilierung eine Dellenstruktur und/oder eine Noppenstruktur aufweist. Vorzugsweise handelt es sich bei der Oberflächenprofilierung um eine Mikrostruktur bzw. Nanostruktur. Ebenfalls ist vorgesehen, dass die Dellenstruktur und/oder die Noppenstruktur Dellen und/oder Noppen aufweist, deren Durchmesser bei gegebener Strömungsgeschwindigkeit Mikrowirbel im Gas erzeugt. Die im Gas enthaltenen Partikel werden auf Grund Ihrer Massenträgheit und der oberhalb der Mikrowirbel anstehenden laminaren Strömung an der Oberfläche vorbeigetragen. Die Mikrowirbel bilden eine Strömungsschicht entlang der Oberfläche, die verhindert, dass Partikel an die Oberfläche gelangen. Dies gilt insbesondere für Rußpartikel, die bei der Verbrennung von erdölbasierten Kraftstoffen, wie beispielsweise Benzin und/oder Diesel, auftreten.

Die Dellenstruktur und/oder die Noppenstruktur weist vorzugsweise mehrere Dellen und/oder Noppen auf. Die Dellen und/oder Noppen können regelmäßig oder unregelmäßig auf der Außenoberfläche der Gaskeramikschicht angeordnet sein. Dabei kann auch vorgesehen sein, dass die Dellenstruktur bzw. Noppenstruktur in die Glaskeramikschicht integriert bzw. mit der Glaskeramikschicht einteilig ausgebildet ist. Die Regelmäßigkeit oder Unregelmäßigkeit der Dellenstruktur bzw. Noppenstruktur kann sich aus dem jeweils gewählten Herstellungsverfahren ergeben.

In bevorzugten Ausführungsformen des erfindungsgemäßen Sensorelements ist die Oberflächenprofilierung durch zusätzliche Beschichtungspartikel, insbesondere Al₂O₃-Partikel, gebildet. Die Außenoberfläche der Glaskeramikschicht kann insbesondere mit zusätzlichen Beschichtungspartikeln beflockt sein, die die Oberflächenprofilierung zu bilden. Mit anderen Worten kann die Oberflächenprofilierung durch Beflocken des Sensorelements mit den zusätzlichen Beschichtungspartikeln gebildet sein. Die Beschichtungspartikel weisen vorzugsweise dasselbe Material wie die Glaskeramikschicht auf, so dass die Beschichtungspartikel mit der Glaskeramikschicht einteilig verschmelzen und somit einen Teil der Glaskeramikschicht bilden. Das Beflocken des Sensorelements mit Beschichtungspartikeln ist besonders einfach durchführbar und ermöglicht eine besonders kostengünstige Herstellung des Sensorelements. Durch die Beflockung mit zusätzlichen Beschichtungsmitteln wird auf der Außenoberfläche der Glaskeramikschicht eine Oberflächenprofilierung ausgebildet, die sich insbesondere durch unregelmäßig angeordnete Noppen auszeichnet. Im Allgemeinen wird die Außenoberfläche der Glaskeramikschicht modifiziert, dass eine Anlagerung von Schmutzpartikeln, insbesondere Rußpartikeln, zumindest erschwert ist.

Alternativ zur Beflockung der Glaskeramikschicht kann die Oberflächenprofilierung durch eine Siebdruckstruktur oder eine laserstrukturierte Aufschmelzstruktur gebildet sein. Durch eine Siebdruckstruktur ist auf einfache Art und Weise eine Dellen- und/oder Noppenstruktur herstellbar, die sich durch eine regelmäßige Anordnung von Dellen bzw. Noppen auszeichnet. Insbesondere können die Dellen und/oder Noppen musterartig in regelmäßigen Reihen und/oder Spalten angeordnet sein. Allerdings kann die Siebdruckstruktur auch eine unregelmäßige Anordnung von Dellen und/oder Noppen aufweisen. Ähnliches gilt für eine laserstrukturierte Aufschmelzstruktur. Durch die Bearbeitung der Glaskeramikschicht mit einem Laser kann eine regelmäßige oder unregelmäßige Struktur durch Aufschmelzen von Glaskeramikmaterial in die Außenfläche der Glaskeramikschicht eingebracht werden.

Bei einer weiteren bevorzugten Ausführungsform des erfindungsgemäßen Sensorelements ist vorgesehen, dass sich die Oberflächenprofilierung über die Glaskeramikschicht und den Träger erstreckt. Mit anderen Worten kann das gesamte Sensorelement vollumfänglich mit der Oberflächenprofilierung ausgestattet sein. Insbesondere ist vorgesehen, dass bei einem Sensorelement, das beispielsweise in einem Abgasstrom zur Strömungsmessung eingesetzt wird, alle dem Abgasstrom ausgesetzten Flächen des Sensorelements mit der Oberflächenprofilierung versehen sind. Insgesamt ist so ein selbstreinigendes Sensorelement gebildet, das eine hohe Messgenauigkeit über einen langen Einsatzzeitraum sicherstellt.

Gemäß einem nebengeordneten Aspekt beruht die Erfindung auf dem Gedanken, ein Sensormodul mit einer Sensorstruktur anzugeben, die ein oder mehrere zuvor beschriebene Sensorelemente aufweist. Dabei kann in bevorzugten Ausführungsformen vorgesehen sein, dass die Sensorelemente wenigstens ein Temperaturmesselement und/oder wenigstens ein Heizleistungsmesselement umfassen. Insgesamt kann das Sensormodul als Strömungssensormodul eingesetzt werden, wobei das Strömungssensormodul wenigstens ein Temperaturmesselement und wenigstens ein Heizleistungsmesselement aufweist. Vorzugsweise sind sowohl das Temperaturmesselement, als auch das Heizleistungsmesselement jeweils mit der Oberflächenprofilierung versehen, so dass eine Anlagerung von Schmutzpartikeln und/oder Rußpartikeln vermieden wird.

Das erfindungsgemäße Sensormodul kann eine anemometrische Messeinrichtung umfassen. Die anemometrische Messeinrichtung kann insbesondere mit einem Konstant-Temperatur-Regelkreis ausgestattet sein. Derartige Messeinrichtungen ermöglichen die Ermittlung des Massenflusses anhand der elektrischen Leistung, die benötigt wird, um das Sensorelement auf einer konstanten Temperatur zu halten. Vorteil einer solchen anemometrischen Messeinrichtung, die mit einem Konstant-Temperatur-Regelkreis ausgestattet ist, ist eine sehr kurze Reaktionszeit auf eine Änderung der Strömung.

Schließlich wird im Rahmen der vorliegenden Erfindung eine Messanordnung mit einem Strömungsrohr und einem zuvor beschriebenen Sensormodul offenbart und beansprucht, wobei die Sensorelemente radial in das Strömungsrohr vorstehen. Zumindest eine innerhalb des Strömungsrohrs angeordnete Außenoberfläche der Sensorelemente weist dabei die Oberflächenprofilierung auf.

Ein weiterer nebengeordneter Aspekt der Erfindung betrifft ein Abgasrückführsystem für eine Verbrennungskraftmaschine mit einem zuvor beschriebenen Sensorelement und/oder einem zuvor beschriebenen Sensormodul und/oder einer zuvor beschriebenen Messanordnung. Vorzugsweise ist bei dem erfindungsgemäßen Abgasrückführsystem vorgesehen, dass das Strömungsrohr der Messanordnung ein abgasführendes Rohr ist. Mit anderen Worten kann bei dem Abgasrückführsystem das Sensormodul mit einem abgasrückführenden Rohr verbunden sein, wobei die Sensorelemente des Sensormoduls in das abgasrückführende Rohr vorstehen. Vorzugsweise stehen die Sensorelemente radial in das abgasrückführende Rohr vor und sind so der Abgasströmung innerhalb des Rohres ausgesetzt. Die Anordnung der Sensorelemente in radialer Richtung hinsichtlich des abgasrückführenden Rohres ist bevorzugt, da auf diese Weise die Strömung zentral im Rohr ermittelbar ist, was zu verbesserten Messergebnissen führt.

Im Rahmen der vorliegenden Erfindung werden außerdem Verfahren zur Herstellung einer Oberflächenprofilierung auf einer Außenoberfläche eines Sensorelements offenbart und beansprucht.

So wird im Rahmen der Erfindung ein Verfahren zur Herstellung einer Oberflächenprofilierung auf einer Außenoberfläche eines, zuvor beschriebenen, Sensorelements durch einen Beflockungsprozess angegeben, wobei der Beflockungsprozess folgende Schritte aufweist:
- Eintauchen des Sensorelements in eine Menge von Beschichtungspartikeln, insbesondere Al₂O₃-Partikeln;
- Abblasen überschüssiger Beschichtungspartikel;
- Trocknen des Sensorelements, vorzugsweise in einem Konvektionsofen;
- Einbrennen der Beschichtungspartikel, insbesondere in die Glaskeramikschicht, durch Erhitzen des Sensorelements, vorzugsweise in einem Durchlaufofen.

Das vorliegende Verfahren ist besonders einfach durchführbar und resultiert in einer Oberflächenprofilierung, die eine Anlagerung von Schmutzpartikeln und/oder Rußpartikeln effizient abwehrt. Die Oberflächenprofilierung kann insbesondere unregelmäßig angeordnete Noppen aufweisen.

In einer bevorzugten Variante des vorgenannten Herstellungsverfahrens wird das Sensorelement zuerst auf einem Beflockungsträger angeordnet und der Beflockungsprozess anschließend mit dem Beflockungsträger durchgeführt. Durch die Verwendung eines Beflockungsträgers können mehrere Sensorelemente gleichzeitig mit der Oberflächenprofilierung versehen werden. Statt der Durchführung der oben genannten Verfahrensschritte mit jeweils einzelnen Sensorelementen können so mehrere Sensorelemente gleichzeitig beflockt werden. Dabei wird der Beflockungsträger, auf welchem die Sensorelemente angeordnet sind, in eine Menge von Beschichtungspartikeln, insbesondere Al₂O₃-Partikel, eingetaucht. Anschließend werden überschüssige Beschichtungspartikel von dem Beflockungsträger abgeblasen. Danach wird der Beflockungsträger getrocknet, insbesondere in einem Konvektionsofen. Schließlich erfolgt das Einbrennen der Beschichtungspartikel in die Glaskeramikschicht der Sensorelemente durch Erhitzen des Beflockungsträgers, wobei vorzugsweise ein Durchlaufofen zum Einsatz gelangt. Die Sensorelemente werden anschließend von dem Beflockungsträger getrennt bzw. durch Trennen des Beflockungsträgers freigelegt. Dazu kann der Beflockungsträger in Lücken, die zwischen den Sensorelementen gebildet sind, zertrennt werden, insbesondere durch Sägen oder Schneiden.

Ein weiteres Verfahren zur Herstellung einer Oberflächenprofilierung eines, zuvor beschriebenen, Sensorelements beruht darauf, die Glaskeramikschicht mittels eines Lasers zu profilieren, insbesondere rasterförmig zu profilieren, so dass auf einer Außenoberfläche des Sensorelements eine Oberflächenprofilierung gebildet wird. Die Laserprofilierung kann auf mehrere Sensorelemente gleichzeitig angewendet werden, die auf einem entsprechenden Trägermaterial angeordnet sind.

Alternativ wird im Rahmen der Erfindung ein Verfahren zur Herstellung einer Oberflächenprofilierung eines, zuvor beschriebenen, Sensorelements angegeben, wobei die Oberflächenprofilierung mittels eines Siebdruckprozesses hergestellt wird. Dabei wird eine Glaskeramikpaste über eine Siebdruckmaske auf das Sensorelement aufgebracht und das Sensorelement anschließend erhitzt, so dass die Glaskeramikpaste eine Glaskeramikschicht mit einer Außenoberfläche bildet, die die Oberflächenprofilierung aufweist.

Die Erfindung wird im Folgenden anhand von Ausführungsbeispielen unter Bezugnahme auf die beigefügten, schematischen Zeichnungen, näher erläutert. Darin zeigen
- Fig. 1: eine Draufsicht auf ein erfindungsgemäßes Sensormodul mit zwei Sensorelementen nach einem bevorzugten Ausführungsbeispiel;
- Fig. 2: eine Seitenansicht des Sensormoduls gemäß Fig. 1;
- Fig. 3: eine perspektivische Ansicht einer Messanordnung mit einem erfindungsgemäßen Sensorelement nach einem bevorzugten Ausführungsbeispiel;
- Fig. 4: eine Draufsicht auf ein erfindungsgemäßes Sensorelement nach einem bevorzugten Ausführungsbeispiel, wobei das Sensorelement eine mittels Siebdruck hergestellte Oberflächenprofilierung mit einer Dellenstruktur aufweist;
- Fig. 5: eine Draufsicht auf ein erfindungsgemäßes Sensorelement nach einem weiteren bevorzugten Ausführungsbeispiel, wobei das Sensorelement eine Oberflächenprofilierung mit einer Noppenstruktur aufweist; und
- Fig. 6-8: jeweils eine Draufsicht auf ein erfindungsgemäßes Sensorelement nach einem bevorzugten Ausführungsbeispiel, wobei eine Oberflächenprofilierung durch Beflocken der Glaskeramikschicht mit unterschiedlichen Aluminiumpartikeln gebildet ist.

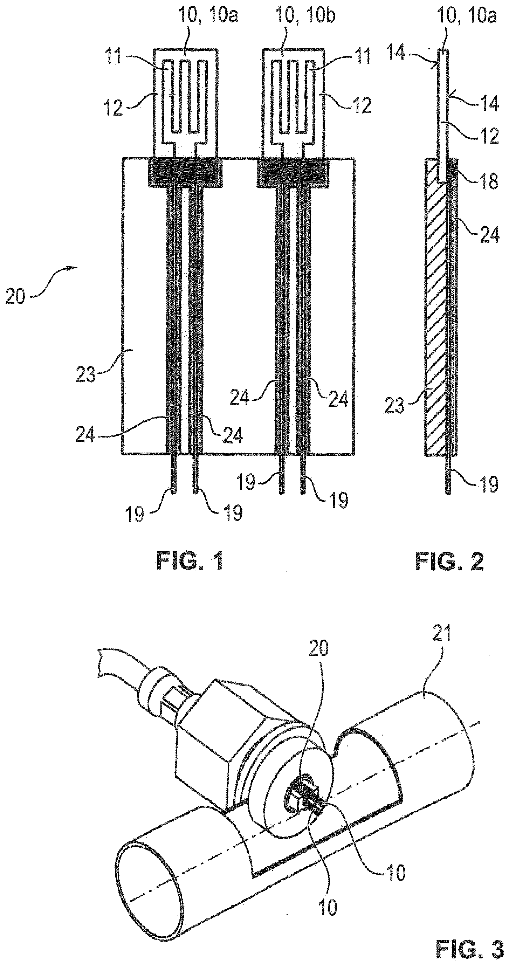

In den Figuren 1 und 2 ist ein Sensormodul 20 gezeigt, das zwei Sensorelemente 10 aufweist. Jedes Sensorelement 10 umfasst eine Dünnschichtstruktur 11, die auf einem Träger 12 angeordnet ist. Die Dünnschichtstruktur 11 ist außerdem durch eine Glaskeramikschicht 13 bedeckt. Insbesondere kann der gesamte Träger 12 mit der Dünnschichtstruktur 11 mit einer Glaskeramikschicht 13 erhöht sein.

Die Sensorelemente 10 bilden im Wesentlichen Schichtwiderstände, die in Aussparungen eines Substrats 23 des Sensormoduls 20 befestigt sind. Insbesondere können ein oder mehrere der Sensorelemente 10 jeweils ein Platin-Widerstandsmesselement, insbesondere ein PT100- oder PT1000-Messelement, bilden.

Jedes der Sensorelemente 10 umfasst einen keramischen Träger 12, auf dem eine Dünnschichtstruktur 11 angeordnet ist. Die Dünnschichtstruktur 11 ist vorzugsweise mäanderförmig auf dem Träger 12 ausgebildet. Zum Schutz vor äußeren Einflüssen und zur elektrischen Isolation ist auf der Dünnschichtstruktur 11 außerdem eine Glaskeramikschicht 13 angeordnet. Die Glaskeramikschicht kann den gesamten Träger 12 mit der Dünnschichtstruktur 11 umhüllen.

Das Substrat des Sensormoduls 20 trägt Drähte 19, die mit den Sensorelementen 10 elektrisch verbunden sind. Insbesondere sind die Drähte 19 mit den Dünnschichtstrukturen 11 der Sensorelemente 10 elektrisch verbunden. Zur Zugentlastung ist die Verbindung durch einen Fixiertropfen 18 gefestigt. Über die Drähte 19 erstreckt sich eine Glasabdeckung 24, die mit dem Substrat 23 verbunden ist, so dass die Drähte 19 unterhalb der Glasabdeckung 24 längsverschieblich fixiert sind.

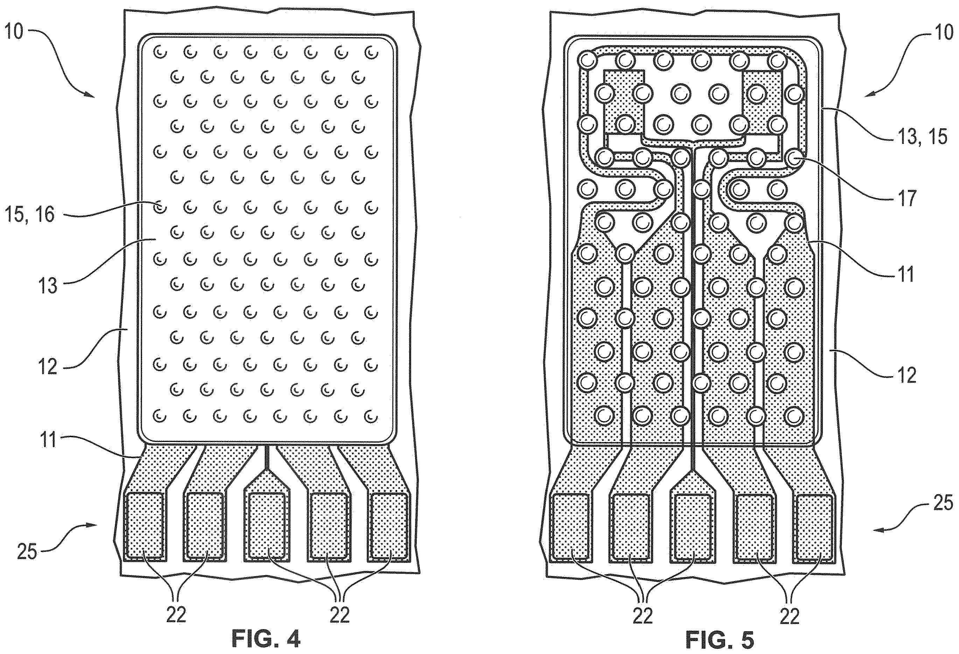

Die Sensorelemente 10 weisen jeweils eine Außenoberfläche 14 auf, die eine Oberflächenprofilierung 15 umfasst. Die Oberflächenprofilierung 15 wird durch eine Mikrostruktur bzw. Nanostruktur gebildet und wird nachfolgend mit Bezugnahme auf die Figuren 4 bis 8 näher beschrieben.

Fig. 3 zeigt einen typischen Einsatzbereich des Sensorelements 10 bzw. des Sensormoduls 20. Insbesondere ist in Fig. 3 eine Messanordnung dargestellt, wobei ein Sensormodul 20 in einem Strömungsrohr 21 angeordnet ist.

Das Strömungsrohr 21 kann beispielsweise ein abgasrückführendes Rohr eines Abgasrückführsystems sein. Das Sensormodul 20 dient in diesem Fall als Strömungssensor zur Messung des Massenstroms in dem Strömungsrohr 21. Dazu ist vorgesehen, dass eines der Sensorelemente 10 des Sensormoduls 20 als Temperaturmesselement 10a und ein weiteres Sensorelement 10 als Heizleistungsmesselement 10b ausgebildet ist. Das Sensormodul ist 20 dabei Teil einer Messeinrichtung, die einen Regelkreis aufweist. Der Regelkreis ist vorzugsweise als Konstant-Temperatur-Regelkreis ausgebildet. Der Konstant-Temperatur-Regelkreis ermöglicht das Beheizen des Heizleistungsmesselements 10b mit einer konstanten Temperatur oder einer konstanten Temperaturdifferenz zum Temperaturmesselement 10a. Dabei kann der Konstant-Temperatur-Regelkreis durch eine elektrische Regelschaltung gebildet sein, die eine Brückenschaltung und einen Verstärker aufweist. Der Massenfluss des Fluids, welches an dem Heizleistungsmesselement 10b vorbeiströmt, bewirkt eine Änderung der Leistungsaufnahme des Heizleistungsmesselements 10b. Mit anderen Worten muss der Regelkreis die Zufuhr von elektrischem Strom zum Heizleistungsmesselement 10b verändern, um die Temperatur konstant zu halten, wenn sich der Massenfluss des vorbeiströmenden Fluids ändert. Die Änderung des Energiebedarfs des Heizleistungsmesselements 10b zum Halten der Referenztemperatur ist elektronisch auswertbar, so dass auf den Massenfluss des im Strömungsrohr 21 strömenden Fluids geschlossen werden kann.

In Fig. 4 ist ein Sensorelement 10 dargestellt, das einen Träger 12 und eine Glaskeramikschicht 13 aufweist. Zwischen dem Träger 12 und der Glaskeramikschicht 13 ist eine Dünnschichtstruktur 11 angeordnet, die in einem unteren Bereich des Sensorelements 10 in Anschlusskontakte 22 mündet. Die Anschlusskontakte 22 sind in einem Anschlussbereich 25 angeordnet, der bei Verbindung des Sensorelements 10 mit einem Sensormodul in eine entsprechende Ausnehmung im Sensormodul 20 eingebettet ist.

Bei dem Sensorelement 10 gemäß Fig. 10 ist die Glaskeramikschicht 13 durch ein Siebdruckverfahren hergestellt und weist eine Dellenstruktur 16 auf. Mit Hilfe einer entsprechenden Siebdruckmaske ist also das Ausgangsmaterial zur Bildung der Glaskeramikschicht 13 so auf das Sensorelement 10 aufgebracht, dass sich eine Dellenstruktur 16 bildet. Als Ausgangsmaterial für die Glaskeramikschicht 13 kommt vorzugsweise eine Glaspaste zum Einsatz. Diese wird über die Siebdruckmaske auf das Sensorelement 10 aufgebracht, wobei sich die Siebdruckmaske auf der aufgebrachten Glaspaste abbildet. Daraus entsteht die Dellenstruktur 16. Das Sensorelement 10 wird anschließend erhitzt, so dass die Glaspaste aushärtet und eine feste Glaskeramikschicht 13 bildet. Dabei bleibt die Dellenstruktur 16 erhalten.

In Fig. 5 ist ein ähnliches Sensorelement 10 dargestellt, dessen Glaskeramikschicht 13 ebenfalls durch ein Siebdruckverfahren hergestellt ist. Im Unterschied zu dem Ausführungsbeispiel gemäß Fig. 4 ist mittels der entsprechend ausgebildeten Siebdruckmaske jedoch keine Dellenstruktur 16, sondern vielmehr eine Noppenstruktur 17 gebildet. Dabei ist bevorzugt vorgesehen, dass die Noppen der Noppenstruktur 17 über eine durchgehende Glaskeramikschicht 13 vorstehen. Mit anderen Worten ist die Dünnschichtstruktur 11 vorzugsweise vollständig durch eine Glaskeramikschicht 13 bedeckt, die zusätzlich auf der Außenoberfläche 14 die Noppenstruktur 17 trägt.

Eine weitere Möglichkeit zur Herstellung einer Oberflächenprofilierung 15 auf der Außenoberfläche 14 der Glaskeramikschicht 13 ist das Beflocken der Glaskeramikschicht 13. Dabei wird das Sensorelement 10 zunächst mit einer Glaspaste versehen, auf welche zusätzlich Beschichtungspartikel aufgebracht werden. Dies kann beispielsweise durch Eintauchen des mit der Glaspaste versehenen Sensorelements 10 in eine Masse von Beschichtungspartikeln bzw. in einen Behälter mit Beschichtungspartikeln erfolgen. Die Beschichtungspartikel werden durch die Glaspaste vorfixiert. Überzählige Beschichtungspartikel werden durch Abblasen entfernt. Anschließend wird die Glaspaste mit den Beschichtungspartikeln durch Erhitzen des Sensorelements 10 eingebrannt, so dass sich eine feste Glaskeramikschicht 13 mit einer Oberflächenprofilierung 15 auf ihrer Außenoberfläche 14 ergibt. Vorzugsweise sind die Glaspaste und die Beschichtungspartikel aus demselben Material gebildet. Ein geeignetes Material ist Aluminiumoxid (Al₂O₃). Es ist auch möglich, die Glaspaste und die Beschichtungspartikel aus unterschiedlichen Materialien herzustellen, wobei sicherzustellen ist, dass sich die Beschichtungspartikel beim Einbrennen gut mit der Glaspaste zu einer gemeinsamen Glaskeramikschicht 13 verbinden.

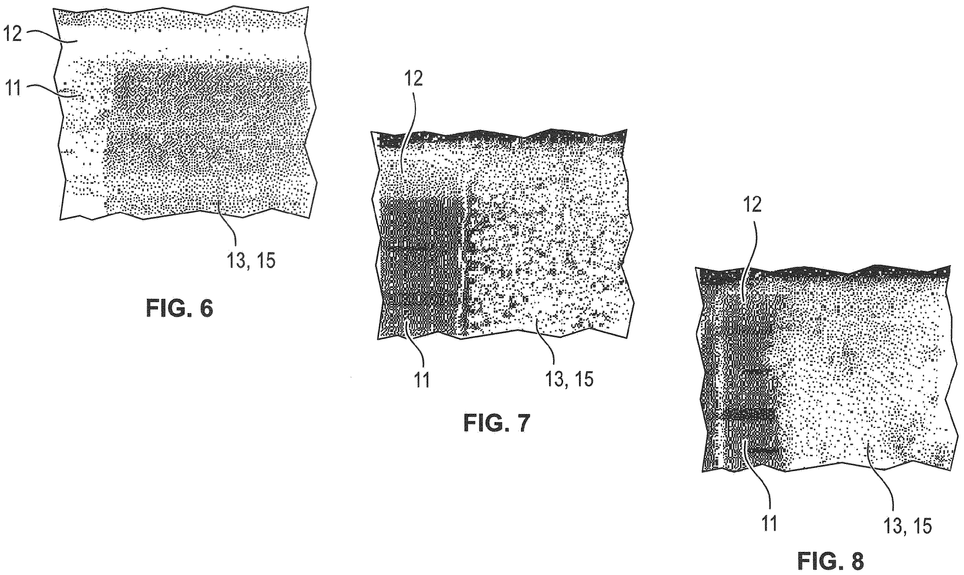

In den Figuren 6 bis 8 sind Sensorelemente 10 dargestellt, die eine Glaskeramikschicht 13 aufweisen, welche durch Beflocken hergestellt ist. Dabei wurden unterschiedliche Materialien für die Beschichtungspartikel verwendet. Es zeigt sich, dass durch die Wahl des Materials der Beschichtungspartikel sich auch die Oberflächenprofilierung 15 entsprechend ändert. Bei dem Ausführungsbeispiel gemäß Fig. 6 weist die Oberflächenprofilierung 15 eine relativ feine Struktur aus unregelmäßig angeordneten und unregelmäßig geformten Noppen auf. Bei dem Ausführungsbeispiel gemäß Fig. 7 sind die Noppen der Oberflächenprofilierung 15 ebenfalls unregelmäßig angeordnet und geformt. Es zeigt sich allerdings eine relativ grobe Oberflächenprofilierung. In Fig. 8 ist eine Oberflächenprofilierung 15 gezeigt, deren Struktur eine Rauigkeit aufweist, die zwischen der Rauigkeit der Oberflächenprofilierung 15 gemäß Fig. 6 und der Oberflächenprofilierung 15 gemäß Fig. 7 liegt.

Für alle Ausführungsbeispiele gilt, dass sowohl der Träger 12, als auch die Glaskeramikschicht 13 einschließlich der Oberflächenprofilierung 15 vorzugsweise ein Aluminiumoxid umfassen, insbesondere aus Al₂O₃ gebildet sind. Ebenfalls kann das Substrat 23 des Sensormoduls 20 sowie die Glasabdeckung 24 des Sensormoduls 20 aus einem Aluminiumoxid, insbesondere Al₂O₃, gebildet sein. Die Dünnschichtstruktur 11 ist vorzugsweise als Platin-Dünnschichtstruktur ausgebildet. Mit anderen Worten umfasst die Dünnschichtstruktur 11 vorzugsweise Platin und/oder eine Platin-Legierung. Selbiges gilt vorzugsweise für die Anschlusskontakte 22, die ebenfalls als Teil der Dünnschichtstruktur 11 aus Platin oder einer Platin-Legierung bestehen können. Die Drähte 19 können als Nickeldrähte ausgebildet sein.

Die Oberflächenprofilierung 15 bewirkt bei einem Einsatz des Sensorelements 10 als Strömungssensor, dass sich im Fluidstrom Mikrowirbel an der Oberflächenprofilierung 15 ausbilden, so dass Schmutzpartikel und/oder Rußpartikel an der Außenoberfläche 14 vorbeigleiten. Eine Anlagerung von Schmutzpartikeln bzw. Rußpartikeln wird so vermieden.

### Bezugszeichenliste

- 10: Sensorelement
- 10a: Temperaturmesselement
- 10b: Heizleistungsmesselement
- 11: Dünnschichtstruktur
- 12: Träger
- 13: Glaskeramikschicht
- 14: Außenoberfläche
- 15: Oberflächenprofilierung
- 16: Dellenstruktur
- 17: Noppenstruktur
- 18: Fixiertropfen
- 19: Draht
- 20: Sensormodul
- 21: Strömungsrohr
- 22: Anschlusskontakt
- 23: Substrat
- 24: Glasabdeckung
- 25: Anschlussbereich

## Patentansprüche

1. Sensorelement (10) mit einer Dünnschichtstruktur (11) aus Platin oder einer Platinlegierung, die auf einem keramischen Träger (12), insbesondere Al₂O₃-Träger, aufgebracht und durch eine Glaskeramikschicht (13) bedeckt ist,
**dadurch gekennzeichnet, dass**
zumindest die Glaskeramikschicht (13) eine Außenoberfläche (14) mit einer Oberflächenprofilierung (15) aufweist.

2. Sensorelement (10) nach Anspruch 1,
**dadurch gekennzeichnet, dass**
die Oberflächenprofilierung (15) eine Dellenstruktur (16) und/oder eine Noppenstruktur aufweist (17).

3. Sensorelement (10) nach Anspruch 2,
**dadurch gekennzeichnet, dass**
die Dellenstruktur (16) und/oder die Noppenstruktur (17) regelmäßig oder unregelmäßig angeordnete Dellen und/oder Noppen aufweist.

4. Sensorelement (10) nach einem der vorhergehenden Ansprüche,
**dadurch gekennzeichnet, dass**
die Oberflächenprofilierung (15) durch zusätzliche Beschichtungspartikel, insbesondere Al₂O₃-Partikel, gebildet ist, die mit der Glaskeramikschicht (13) verschmolzen sind.

5. Sensorelement (10) nach einem der vorhergehenden Ansprüche,
**dadurch gekennzeichnet, dass**
die Außenoberfläche (14) der Glaskeramikschicht (13) mit zusätzlichen Beschichtungspartikeln beflockt ist, wobei die Beschichtungspartikel die Oberflächenprofilierung (15) bilden.

6. Sensorelement (10) nach einem Ansprüche 1 bis 5,
**dadurch gekennzeichnet, dass**
die Oberflächenprofilierung (15) durch eine Siebdruckstruktur oder eine laserstrukturierte Aufschmelzstruktur gebildet ist.

7. Sensorelement (10) nach einem der vorhergehenden Ansprüche,
**dadurch gekennzeichnet, dass**
sich die Oberflächenprofilierung (15) über die Glaskeramikschicht (13) und den Träger (12) erstreckt.

8. Sensormodul (20) mit einer Sensorstruktur, die ein oder mehrere Sensorelemente (10) nach einem der vorhergehenden Ansprüche aufweist.

9. Sensormodul (20) nach Anspruch 8,
**dadurch gekennzeichnet, dass**
die Sensorelemente (10) wenigstens ein Temperaturmesselement (10a) und/oder wenigstens ein Heizleistungsmesselement (10b) umfassen.

10. Sensormodul (20) nach Anspruch 8 oder 9,
**dadurch gekennzeichnet, dass**
das Sensormodul (20) eine anemometrische Messeinrichtung, insbesondere mit einem Konstant-Temperatur-Regelkreis, umfasst.

11. Messanordnung mit einem Strömungsrohr (21) und einem Sensormodul (20) nach einem der Ansprüche 8 bis 10, wobei die Sensorelemente (10) radial in das Strömungsrohr (21) vorstehen, und wobei zumindest eine innerhalb des Strömungsrohrs (21) angeordnete Außenoberfläche (14) der Sensorelemente (10) die Oberflächenprofilierung (15) aufweist.

12. Abgasrückführsystem für eine Verbrennungskraftmaschine mit einem Sensorelement (10) und/oder einem Sensormodul (20) und/oder einer Messanordnung nach einem der vorhergehenden Ansprüche.

13. Abgasrückführsystem nach Anspruch 12,
**dadurch gekennzeichnet, dass**
das Strömungsrohr (21) der Messanordnung ein abgasrückführendes Rohr ist.

14. Verfahren zur Herstellung einer Oberflächenprofilierung (15) auf einer Außenoberfläche (14) eines Sensorelements (10) nach einem der Ansprüche 1 bis 7 durch einen Beflockungsprozess, der folgende Schritte aufweist:
- Eintauchen des Sensorelements (10) in eine Menge von Beschichtungspartikeln, insbesondere Al₂O₃-Partikeln;
- Abblasen überschüssiger Beschichtungspartikel;
- Trocknen des Sensorelements (10), insbesondere in einem Konvektionsofen;
- Einbrennen der Beschichtungspartikel durch Erhitzen des Sensorelements (10), insbesondere in einem Durchlaufofen.

15. Verfahren nach Anspruch 14,
**dadurch gekennzeichnet, dass**
das Sensorelement (10) zuerst auf einem Beflockungsträger angeordnet und der Beflockungsprozess mit dem Beflockungsträger durchgeführt wird.

16. Verfahren zur Herstellung einer Oberflächenprofilierung (15) eines Sensorelements (10) nach einem der Ansprüche 1 bis 7, wobei eine Glaskeramikschicht (13) mittels eines Lasers profiliert, insbesondere rasterförmig profiliert, wird derart, dass auf einer Außenoberfläche (14) der Glaskeramikschicht (13) die Oberflächenprofilierung (15) gebildet wird.

17. Verfahren zur Herstellung einer Oberflächenprofilierung (15) eines Sensorelements (10) nach einem der Ansprüche 1 bis7 mittels eines Siebdruckprozesses, wobei eine Glaspaste über eine Siebdruckmaske auf das Sensorelement (10) aufgebracht und das Sensorelement (10) anschließend erhitzt wird derart, dass die Glaspaste eine Glaskeramikschicht (13) mit einer Außenoberfläche (14) bildet, die die Oberflächenprofilierung (15) aufweist.

## Claims

1. A sensor element (10) with a thin-film structure (11) made of platinum or a platinum alloy which is deposited on a ceramic carrier (12), in particular a Al₂O₃ carrier, and covered with a glass ceramic layer (13),
**characterized in that**
at least the glass ceramic layer (13) has an outer surface (14) with a surface profiling (15).

2. The sensor element (10) according to Claim 1,
**characterized in that**
the surface profiling (15) has a dimpled structure (16) and/or a nubby structure (17).

3. The sensor element (10) according to Claim 2,
**characterized in that**
the dimpled structure (16) and/or the nubby structure (17) has regularly or irregularly arranged dimples and/or nubs.

4. The sensor element (10) according to any one of the preceding claims,
**characterized in that**
the surface profiling (15) is formed by additional coating particles, in particular Al₂O₃ particles, which are fused with the glass ceramic layer (13).

5. The sensor element (10) according to any one of the preceding claims,
**characterized in that**
the outer surface (14) of the glass-ceramic layer (13) is flocked with additional coating particles, wherein the coating particles form the surface profiling (15).

6. The sensor element (10) according to any one of Claims 1 to 5,
**characterized in that**
the surface profiling (15) is formed by a screen printing structure or a laser-structured fused structure.

7. The sensor element (10) according to any one of the preceding claims,
**characterized in that**
the surface profiling (15) extends over the glass ceramic layer (13) and the carrier (12).

8. A sensor module (20) with a sensor structure which has one or more sensor elements (10) according to any one of the preceding claims.

9. The sensor module (20) according to Claim 8,
**characterized in that**
the sensor elements (10) comprise at least one temperature measuring element (10a) and/or at least one heat output measuring element (10b).

10. The sensor module (20) according to Claim 8 or 9,
**characterized in that**
the sensor module (20) comprises an anemometric measuring device, in particular with a constant-temperature control loop.

11. A measuring assembly with a flow tube (21) and a sensor module (20) according to any one of Claims 8 to 10, wherein the sensor elements (10) protrude radially into the flow tube (21), and wherein at least one outer surface (14) of the sensor elements (10) arranged within the flow tube (21) has the surface profiling (15).

12. An exhaust gas recirculation system for an internal combustion engine with a sensor element (10) and/or a sensor module (20) and/or a measuring assembly according to any one of the preceding claims.

13. The exhaust gas recirculation system according to Claim 12,
**characterized in that**
the flow tube (21) of the measuring assembly is an exhaust gas recirculation pipe.

14. A method for producing a surface profiling (15) on an outer surface (14) of a sensor element (10) according to any one of Claims 1 to 7, by a flocking process which includes the following steps:
- immersing the sensor element (10) in a quantity of coating particles, in particular Al₂O₃ particles;
- blowing off excess coating particles;
- drying the sensor element (10), in particular in a convection oven;
- baking the coating particles in by heating the sensor element (10), in particular in a continuous furnace.

15. The method according to Claim 14,
**characterized in that**
the sensor element (10) is first placed on a flocking carrier and the flocking process is carried out with the flocking carrier.

16. A method for producing a surface profiling (15) of a sensor element (10) according to any one of Claims 1 to 7, wherein a glass ceramic layer (13) is profiled, in particular profiled in a grid pattern by means of a laser, in such manner that the surface profiling (15) is formed on an outer surface (14) of the glass-ceramic layer (13).

17. The method for producing a surface profiling (15) of a sensor element (10) according to any one of claims 1 to 7 by means of a screen printing process, wherein a glass paste is applied to the sensor element (10) through a screen printing mask and the sensor element (10) is subsequently heated in such manner that the glass paste forms a glass ceramic layer (13) with an outer surface (14) which has the surface profiling (15).

## Revendications

1. Elément capteur (10), pourvu d'une structure en couche mince (11) en platine ou en un alliage de platine, qui est appliquée sur un support (12) en céramique, notamment un support en Al₂O₃ et recouverte d'une couche en vitrocéramique (13),
**caractérisé**
**en ce qu'**au moins la couche en vitrocéramique (13) comporte une surface extérieure (14) pourvue d'un profilage superficiel (15).

2. Élément capteur (10) selon la revendication 1,
**caractérisé en ce que**
le profilage superficiel (15) comporte une structure alvéolée (16) et/ou une structure à bulles (17).

3. Élément capteur (10) selon la revendication 2,
**caractérisé en ce que**
la structure alvéolée (16) et/ou la structure à bulles (17) comporte des alvéoles et/ou des bulles placées régulièrement ou irrégulièrement.

4. Élément capteur (10) selon l'une quelconque des revendications précédentes,
**caractérisé en ce que**
le profilage superficiel (15) est créé par des particules de revêtement supplémentaires, notamment des particules d'Al₂O₃, qui sont fusionnées avec la couche en vitrocéramique (13).

5. Élément capteur (10) selon l'une quelconque des revendications précédentes,
**caractérisé en ce que**
la surface extérieure (14) de la couche en vitrocéramique (13) est floquée avec des particules de revêtement supplémentaires, les particules de revêtement formant le profilage superficiel (15).

6. Élément capteur (10) selon l'une quelconque des revendications 1 à 5,
**caractérisé en ce que**
le profilage superficiel (15) est formé d'une structure sérigraphiée ou d'une structure fusionnée structurée au laser.

7. Élément capteur (10) selon l'une quelconque des revendications précédentes,
**caractérisé en ce que**
le profilage superficiel (15) s'étend au-dessus de la couche en vitrocéramique (13) et du support (12).

8. Module capteur (20) pourvu d'une structure de capteur, qui comporte un ou plusieurs éléments capteurs (10) selon l'une quelconque des revendications précédentes.

9. Module capteur (20) selon la revendication 8,
**caractérisé en ce que**
les élément capteurs (10) comprennent au moins un élément de mesure de la température (10a) et/ou au moins un élément de mesure de la puissance de chauffe (10b).

10. Module capteur (20) selon la revendication 8 ou 9, **caractérisé en ce que**
le module capteur (20) comprend un système de mesure anémométrique, notamment pourvu d'un circuit régulateur de température constant.

11. Agencement de mesure, pourvu d'un tube d'écoulement (21) et d'un module capteur (20) selon l'une quelconque des revendications 8 à 10, les éléments capteurs (10) saillant en direction radiale dans le tube d'écoulement (21), et au moins une surface extérieure (14) de l'élément capteur (10) placée à l'intérieur du tube d'écoulement (21) comportant le profilage superficiel (15).

12. Système de recyclage des gaz d'échappement destiné à un moteur à combustion interne, pourvu d'un élément capteur (10) et/ou d'un module capteur (20) et/ou d'un agencement de mesure selon l'une quelconque des revendications précédentes.

13. Système de recyclage des gaz d'échappement selon la revendication 12, **caractérisé en ce que**
le tube d'écoulement (21) de l'agencement de mesure est un tube recyclant les gaz d'échappement.

14. Procédé, destiné à créer un profilage superficiel (15) sur une surface extérieure (14) d'un élément capteur (10), selon l'une quelconque des revendications 1 à 7 par un processus de flocage qui comporte les étapes suivantes, consistant à :
- immerger l'élément capteur (10) dans une quantité de particules de revêtement, notamment de particules d'Al₂O₃ ;
- retirer par soufflage les particules de revêtement excédentaires ;
- faire sécher l'élément capteur (10), notamment dans un four à convection ;
- faire cuire les particules de revêtement en faisant chauffer l'élément capteur (10), notamment dans un four continu.

15. Procédé selon la revendication 14,
**caractérisé en ce**
**qu'**on place d'abord l'élément capteur (10) sur un support de flocage et on procède au processus de flocage avec le support de flocage.

16. Procédé, destiné à créer un profilage superficiel (15) d'un élément capteur (10) selon l'une quelconque des revendications 1 à 7, lors duquel on profile, notamment en profile en forme de trame une couche en vitrocéramique (13) au moyen d'un laser, de telle sorte que sur une surface extérieure (14) de la couche en vitrocéramique (13) soit créé le profilage superficiel (15).

17. Procédé, destiné à créer un profilage superficiel (15) d'un élément capteur (10) selon l'une quelconque des revendications 1 à 7, au moyen d'un processus de sérigraphie, lors duquel on applique une pâte de verre par l'intermédiaire d'un masque de sérigraphie sur l'élément capteur (10) et fait chauffer ensuite l'élément capteur (10), de telle sorte que la pâte de verre forme une couche en vitrocéramique (13) pourvue d'une surface extérieure (14) qui comporte le profilage superficiel (15).
